Europäisches Patentamt

European Patent Office

Office européen des brevets

(11) Veröffentlichungsnummer: **0 616 297 A1**

## (12) EUROPÄISCHE PATENTANMELDUNG

(21) Anmeldenummer: **93118953.4**

(22) Anmeldetag: **25.11.93**

(51) Int. Cl.5: **G06K 11/16**

(30) Priorität: **26.02.93 DE 4306855**

(43) Veröffentlichungstag der Anmeldung:
**21.09.94 Patentblatt 94/38**

(84) Benannte Vertragsstaaten:
**DE FR GB**

(71) Anmelder: **Aristo Graphic Systeme GmbH & Co KG**
**Schnackenburgallee 41**
**D-22525 Hamburg (DE)**

(72) Erfinder: **Roemersma, Henk**
**Brahmsstrasse 31**
**D-25337 Elmshorn (DE)**

(54) Digitalisiereinrichtung.

(57) Eine Digitalisiereinrichtung hat ein Digitalisiertablett, das für jede der beiden Koordinatenrichtungen eine in sich regelmäßig wiederholende Leiterbahngruppen unterteilte erste Gitterwicklung und eine in sich regelmäßig wiederholende Leiterbahngruppen unterteilte zweite Gitterwicklung aufweist, die über die gesamte Arbeitsfläche um unterschiedliche Abstände gegeneinander versetzt sind. Eine Ansteuerschaltung beaufschlagt die Gitterwicklungen mit einer vorgegebenen Folge von periodischen Signalen, wobei die Beaufschlagungen im wesentlichen ohne Unterbrechungen aufeinander folgen. Zwischen dem Ende der Beaufschlagung der Gitterwicklungen für die andere Koordinatenrichtung und dem Anfang der Beaufschlagung der Gitterwicklung für die eine Koordinatenrichtung ist jedoch eine Unterbrechungszeitspanne vorgesehen. Eine auf das Digitalisiertablett auflegbare Abtastspule ist mit einer Auswerteschaltung verbunden, wobei die Auswerteschaltung und die Ansteuerschaltung für das Digitalisiertablett voneinander galvanisch getrennt sind und unabhängig voneinander arbeiten. Die Auswerteschaltung kann den Beginn der Beaufschlagung der Gitterwicklung für die eine Koordinatenrichtung aus dem Ende der Unterbrechungszeitspanne ermitteln. Die Auswerteschaltung bestimmt die Position der Abtastspule auf dem Digitalisiertablett aus der Phasendifferenz der Signale der Gitterwicklungen für die jeweilige Koordinatenrichtung.

Fig. 1

EP 0 616 297 A1

Rank Xerox (UK) Business Services
(3.10/3.09/3.3.4)

Die Erfindung bezieht sich auf eine Digitalisiereinrichtung mit einem Digitalisiertablett, das für jede der beiden Koordinatenrichtungen eine in sich regelmäßig wiederholende Leiterbahngruppen unterteilte erste Gitterwicklung und eine in sich regelmäßig wiederholende Leiterbahngruppen unterteilte zweite Gitterwicklung aufweist, die derart angeordnet sind, daß die ersten Leiterbahnen benachbarter Leiterbahngruppen dieser ersten und zweiten Gitterwicklungen in der zugehörigen Koordinatenrichtung über die gesamte Arbeitsfläche unterschiedliche Abstände haben, wobei die Gitterwicklungen für die eine Koordinatenrichtung von einer Ansteuerschaltung mit einer vorgegebenen Folge von periodischen Signalen beaufschlagt werden, so daß für eine vorgegebene Zeitspanne ein erstes Signal an das erste Ende der ersten Gitterwicklung und für eine unmittelbar darauffolgende zweite vorgegebene Zeitspanne ein zweites Signal an das erste Ende der zweite Gitterwicklung gelegt wird, und wobei unmittelbar anschließend an die Beaufschlagung der Gitterwicklungen für die eine Koordinatenrichtung die Gitterwicklungen für die andere Koordinatenrichtung in der gleichen Weise beaufschlagt werden, sowie mit einer auf das Digitalisiertablett auflegbaren Abtastspule, in der die Signale Spannungen induzieren, die zur Ermittlung der Position der Abtastspule auf dem Digitalisiertablett einer Auswerteschaltung zugeführt werden.

Bei einer bekannten Digitalisiereinrichtung dieser Art (DE-PS 35 44 673) werden die Gitterwicklungen, von denen die eine zur Durchführung einer Grob-Messung und die andere zur Durchführung einer Fein-Messung dient, mit periodischen digitalen Impulsfolgen angesteuert, so daß im Digitalisierbetrieb immer eine der Gitterwicklungen mit Signalen beaufschlagt ist. Dabei arbeiten die Ansteuerschaltung und die Auswerteschaltung derart zusammen, daß die Auswerteschaltung direkt Informationen über den Beginn des Beaufschlagens der jeweiligen Gitterwicklung mit einem Signal erhält, und daher aus der Phasenverschiebung von Signal-Nulldurchgängen die Leiterbahngruppe der ersten Gitterwicklung ermitteln kann, in deren Bereich sich die Abtastspule befindet, da dieser Phasenunterschied infolge der über die gesamte Arbeitsfläche des Digitalisiertabletts unterschiedlichen Abstände der Leiterbahngruppen der ersten und zweiten Gitterwicklung eine eindeutige Größe darstellt, die die jeweilige Leiterbahngruppe der ersten Gitterwicklung bestimmt. Aus dem Nulldurchgang des Signals der zweiten Gitterwicklung ermittelt die Auswerteschaltung die genaue Position der Abtastspule innerhalb der zuvor bestimmten Leiterbahngruppe der zweiten Gitterwicklung und damit die genaue Position der Abtastspule auf der Arbeitsfläche in der einen Koordinatenrichtung. Entsprechend erfolgt die Bestimmung der Position der Abtastspule auf der Arbeitsfläche in der anderen Koordinatenrichtung.

Die bekannte Digitalisiereinrichtung arbeitet äußerst zufriedenstellend und genau, erfordert jedoch das direkte Zusammenwirken von Ansteuerschaltung und Auswerteschaltung, so daß das Digitalisiertablett und die Abtastspule im wesentlichen eine zusammengehörige Baueinheit darstellen müssen.

Es ist Aufgabe der Erfindung, einen anwendungstechnisch flexibleren Aufbau einer Digitalisiereinrichtung zu schaffen.

Zur Lösung dieser Aufgabe wird eine Digitalisiereinrichtung der eingangs erwähnten Art erfindungsgemäß dadurch ausgestaltet, daß die Ansteuerschaltung derart dem Digitalisiertablett und die Auswerteschaltung derart der Abtastspule zugeordnet sind, daß sie voneinander galvanisch getrennt sind und unabhängig voneinander arbeiten, daß zwischen Ende der Beaufschlagung der Gitterwicklungen für die andere Koordinatenrichtung und dem Anfang der Beaufschlagung der Gitterwicklungen für die eine Koordinatenrichtung eine Unterbrechungszeitspanne vorgesehen ist, so daß die Auswerteschaltung den Beginn der Beaufschlagung der Gitterwicklungen für die eine Koordinatenrichtung feststellen kann, und daß die Auswerteschaltung zur Ermittlung der Position der Abtastspule auf dem Digitalisiertablett die Phasendifferenz von erstem und zweitem Signal der Gitterwicklungen für die jeweilige Koordinatenrichtung ermittelt.

Bei der erfindungsgemäßen Digitalisiereinrichtung sind somit Digitalisiertablett einschließlich Ansteuerschaltung und Abtastspule einschließlich Auswerteschaltung galvanisch und funktionsmäßig voneinander getrennt, so daß ein getrennter räumlicher Aufbau möglich ist. Insbesondere kann dadurch das Digitalisiertablett sehr flach und kompakt ausgebildet werden, da es lediglich die Ansteuerschaltung zu enthalten braucht, während die Auswerteschaltung an einer anderen Stelle, etwa als Teil der Ausrüstung eines PC vorgesehen sein kann, an den die Abtastspule angeschlossen ist. Die fehlende Zuordnung der Funktionen und damit die fehlende Kenntnis der Auswerteschaltung bezüglich des Zeitpunkts der Beaufschlagung der verschiedenen Gitterwicklungen mit Signalen wird erfindungsgemäß dadurch korrigiert, daß die Beaufschlagung mit Signalen in einer ganz bestimmten, vorgegebenen Abfolge stattfindet, so daß zwar alle Signale für die Gitterwicklungen für die eine und für die andere Koordinatenrichtung unmittelbar aufeinanderfolgen und auch die Beaufschlagung der Gitterwicklungen für die andere Koordinatenrichtung unmittelbar anschließend an die Beaufschlagung der Gitterwicklungen für die eine Koordinatenrichtung stattfindet, jedoch vor dem Beginn der Beaufschlagung der ersten Gitterwicklung für die eine Koordinatenrichtung eine Unterbrechungszeitspanne vorgesehen ist. Stellt daher die Auswerteschaltung bei Auswertung der von den Signalen in der Abtastspule induzierten Spannungen diese Unterbrechungszeitspanne bzw. den Einsatz von Signalen nach Beendigung dieser Unterbrechungszeitspanne fest, so kann sie das unmittelbar nach der Unterbrechungszeitspanne auftretende Signal als das Signal auf der ersten Gitterwicklung für die eine Koordinatenrichtung identifizieren und dann auch die nachfolgenden Signale entsprechend identifizieren. Damit ist für den Auswertevorgang die "Startzeit" bekannt, die dann die Schlußfolgerung auf die Gitterwicklung zuläßt, deren Signal gerade ausgewertet werden soll.

Nach dieser Feststellung kann dann die Phasendifferenz zwischen erstem und zweitem Signal der Gitterwicklungen der jeweiligen Koordinatenrichtung ermittelt und aus dieser auf die Position der Lage der Abtastwicklung auf dem Digitalisiertablett geschlossen werden, da, wie vorstehend bereits erwähnt, die Phasendifferenz infolge der über die Abmessungen der Arbeitsfläche des Digitalisiertabletts unterschiedlichen Abstände zwischen den Leiterbahnen von erster und zweiter Gitterwicklung einer Position auf dem Digitalisiertablett eindeutig zugeordnet werden kann.

Üblicherweise wird in der Abtastspule eine Spannung induziert, die zu Beginn der Zeitspanne für das Signal ein gewisses Einschwingverhalten zeigt, so daß die Spannung zunächst eine Form hat, die nicht unmittelbar die eigentliche Signalform wiederspiegelt, die erst nach einer gewissen Übergangszeitspanne erreicht wird. Da somit die Abtastspule der Auswerteschaltung beim Übergang der Ermittlung von einem Signal auf der einen Gitterwicklung zu einem Signal auf der nächsten Gitterwicklung eine verzerrte Spannung liefert, die nur schwer auszuwerten ist, kann es vorkommen, daß ein derartiger Übergangsbereich von der Ansteuerschaltung als Beginn des ebenfalls gewisse Einschwingvorgänge zeigenden Signals auf der ersten Gitterwicklung für die eine Koordinatenrichtung interpretiert. Um diese mögliche fehlerhafte Auswertung zu vermeiden, kann die erste Gitterwicklung für die eine Koordinatenwicklung während der Unterbrechungszeitspanne mit einem periodischen Hilfssignal beaufschlagt werden. Die Frequenz dieses Hilfssignals kann beispielsweise halb so groß wie die Frequenz des ersten Signals sein.

Der Übergang von Hilfssignal auf der ersten Gitterwicklung zum ersten Signal auf der ersten Gitterwicklung induziert in der Abtastspule eine Spannung, deren Form sich ganz eindeutig von derjenigen unterscheidet, die auftritt, wenn ein Übergang von einem Signal auf einer Gitterwicklung auf ein Signal auf einer anderen Gitterwicklung stattfindet. Auf diese Weise wird erreicht, daß die Auswerteschaltung ohne große Schwierigkeiten in der Lage ist, das Ende der Unterbrechungszeitspanne und somit den Beginn der Beaufschlagung der ersten Gitterwicklung für die eine Koordinatenrichtung mit dem ersten Signal zu ermitteln.

Wie vorstehend bereits erwähnt, wird die Position der Abtastspule bezüglich der jeweiligen Koordinatenrichtung durch die Ermittlung der Phasenverschiebung zwischen den von den ersten und zweiten Signalen in der Abtastspule erzeugten Spannungen ermittelt, da die Größe dieser Phasenverschiebung die Lage auf dem Digitalisiertablett eindeutig wieder gibt. Dabei ergibt sich jedoch eine gewisse Ungenauigkeit, weil der von der Abtastspule ermittelte Verlauf des ersten Signals in der Gitterwicklung für die eine Koordinatenrichtung infolge Schaltungseigenschaften u.ä. unvermeidbar mit einem gewissen Fehler behaftet ist. Um diesen Fehler zu kompensieren, kann die erste Gitterwicklung für jede der beiden Koordinatenrichtungen unmittelbar anschließend an die Beaufschlagung der zugehörigen zweiten Gitterwicklung mit dem zweiten Signal an ihrem zweiten Ende für eine vorgegebene Zeitspanne mit einem dritten Signal beaufschlagt werden.

Auf diese Weise durchläuft also die erste Gitterwicklung für jede der Koordinatenrichtungen nicht nur ein am ersten Ende angelegtes erstes Signal, sondern ein weiteres Signal, das am gegenüberliegenden Ende der ersten Gitterwicklung angelegt wird. Die sich daraus ergebenden, in der Abtastspule induzierten Spannungen lassen sich in der Auswerteschaltung mitteln, so daß sich die Fehlereinflüsse durch den Schaltungsaufbau und auch Fehler infolge ungenauer Ermittlung des Endes der Unterbrechungszeitspanne gegenseitig kompensieren und die genaue Lage des Nulldurchgangs der vom ersten Signal induzierten Spannung und damit auch die genaue Größe der Phasenverschiebung zwischen von erstem und zweitem Signal induzierten Spannungen ermittelt werden kann. Auf diese Weise läßt sich also die tatsächliche Position der Abtastspule auf dem Digitalisiertablett mit erhöhter Genauigkeit feststellen.

Die Auswertung der an die Gitterwicklungen gelegten Signale wird dann vereinfacht, wenn die Form und die Frequenz aller Signale sowie die Zeitspannen, während der sie an die Gitterwicklungen gelegt sind, alle gleich sind. Vorzugsweise umfaßt dabei jede Zeitspanne vier Perioden des angelegten Signals, so daß eine ausreichend Einschwingzeit vorhanden ist und beispielsweise die von der dritten Periode des Signals induzierte Spannung in der Auswerteschaltung ausgewertet werden kann.

Die Erfindung wird im folgenden anhand der Figuren näher erläutert.

Figur 1     zeigt schematisch den Aufbau einer Digitalisiereinrichtung.

Figur 2    zeigt den Verlauf und die Anordnungen der Leiterbahnen der ersten und der zweiten Gitterwicklungen.

Figur 3    zeigt im oberen Teil die Signale zur Beaufschlagung einer Gitterwicklung und im unteren Teil die in der Abtastspule induzierten Spannungsimpulse sowie die aus ihnen erhaltenen sinusförmigen Signale.

Figur 4    zeigt schematisch die Signalfolge für die Beaufschlagung der Gitterwicklungen für die eine und die andere Koordinatenrichtung.

Figur 5    zeigt eine modifizierte Signalfolge für die Beaufschlagung der Gitterwicklungen für die eine und für die andere Koordinatenrichtung.

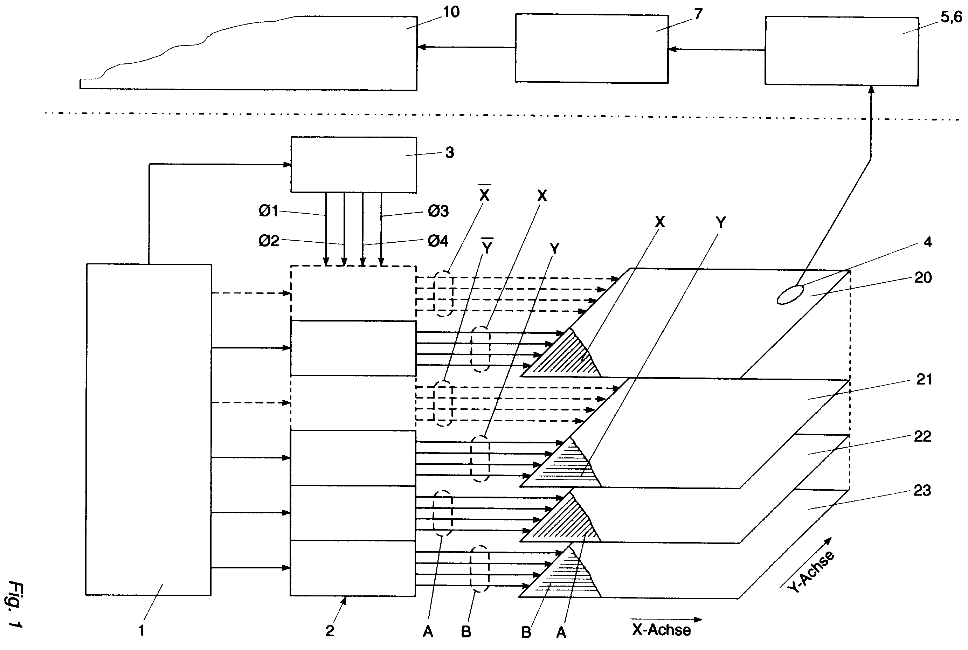

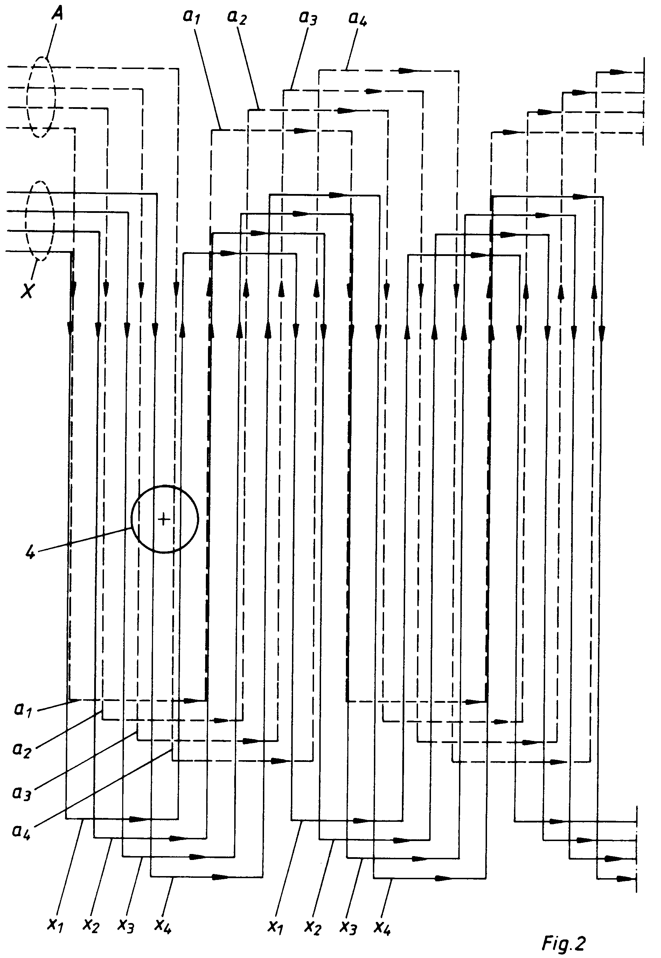

Die Digitalisiereinrichtung gemäß Figuren 1 und 2 stimmt bezüglich des Aufbaus und der Ansteuerung des Digitalisiertabletts, das die Gitterwicklungen aus den Ebenen 20, 21, 22 und 23 enthält, weitgehend mit demjenigen aus der vorstehend erwähnten DE-PS 35 44 673 überein. Es wird daher auf die Erläuterungen dieser Patentschrift Bezug genommen.

Das dargestellte Digitalisiertablett enthält vier Gitterwicklungen X, Y, A, B. Jede dieser Gitterwicklungen enthält, wie später erläutert werden wird, Leiterbahngruppen aus jeweils vier Leiterbahnen, die von einer Treiberstufe 2 angesteuert werden. Der Treiberstufe 2 werden von einer Ansteuerschaltung 1, etwa in Form eines Mikroprozessors, über eine Phasenschieberschaltung 3 über vier Leitungen um 45° phasenverschobene Rechteckimpulse $\Phi_1$, $\Phi_2$, $\Phi_3$, $\Phi_4$ zugeführt, die alle eine Länge von 180° haben.

Wie dargestellt, verlaufen die Leiterbahnen der in der Ebene 20 liegenden Gitterwicklung X senkrecht zur X-Achse und die in der Ebene 21 liegenden Leiterbahnen der Gitterwicklung Y senkrecht zur Y-Achse. Die Leiterbahnen der Gitterwicklung A liegen in der Ebene 22 und verlaufen parallel zu den Leiterbahnen der Gitterwickung X, während die Leiterbahnen der Gitterwicklung B in der Ebene 23 parallel zu den Leiterbahnen der Gitterwicklung Y verlaufen. Die parallelen Ebenen 20, 21, 22 und 23 wurden lediglich zur Verdeutlichung in großem Abstand voneinander dargestellt. Normalerweise liegen sie eng benachbart, und die verschiedenen Gitterwicklungen sind lediglich durch dünne Isolierstoffschichten voneinander getrennt.

Der Verlauf der Leiterbahnen der Gitterwicklung X und der Gitterwicklung A ist schematisch und etwas vereinfacht in Figur 2 dargestellt. Wie zu erkennen ist, haben die Leiterbahnen $x_1$, $x_2$, $x_3$, $x_4$ der Gitterwicklung X alle gleichen Abstand, d.h. der Abstand der Leiterbahnen innerhalb einer Leiterbahngruppe aus diesen Leiterbahnen ist konstant. Im dargestellten Ausführungsbeispiel ist auch der Abstand der letzten Leiterbahn einer Gruppe von der ersten Leiterbahn der folgenden Gruppe konstant. Dabei unterscheiden sich benachbarte Leiterbahngruppen elektrisch dadurch, daß sie die eingespeisten Ströme in entgegengesetzten Richtungen leiten, wie dies durch die Pfeile in Figur 2 angedeutet ist.

Es sei erwähnt, daß in Figur 2 nur der im Bereich der angedeuteten Anschlüsse zur Verbindung mit der Treiberschaltung 2 liegende Beginn von Leiterbahnen gezeigt ist, die sich über die gesamte, in Richtung der X-Achse verlaufende Breite des Digitalisiertabletts 1 erstrecken und die, wie üblich, am Ende umgekehrt werden und die dargestellten Leiterbahnen überlagernd zur Einspeiseseite zurückgeführt werden.

Ferner ist in Figur 2 der entsprechende Teil der Gitterwicklung A gezeigt, die Leiterbahngruppe mit jeweils vier Leiterbahnen $a_1$, $a_2$, $a_3$ und $a_4$ aufweist. Die Leiterbahnen einer Leiterbahngruppe haben gleichen Abstand voneinander, und auch der Abstand zwischen der letzten Leiterbahn $a_4$ einer Gruppe und der ersten Leiterbahn $a_1$ der nachfolgenden Gruppe ist gleich. Die Leiterbahnen der Gitterwicklung A sind gestrichelt dargestellt. Wie zu erkennen ist, ist der Abstand zwischen benachbarten Leiterbahnen der Gitterwicklung X deutlich kleiner als der Abstand zwischen benachbarten Leiterbahnen der Gitterwicklung A, d.h. das Digitalisiertablett enthält in diesem Fall eine größere Anzahl von Leiterbahnen bzw. Leiterbahngruppen der Gitterwicklung X als von Leiterbahnen bzw. Leiterbahngruppen der Gitterwicklung A. Auf diese Weise wird erreicht, daß gezählt von der ersten, mit der Einspeisung verbundenen Leiterbahngruppe jeder der beiden Gitterwicklungen X und A die Leiterbahnen gleich numerierter Gruppen der beiden Gitterwicklungen X und A immer einen unterschiedlichen räumlichen Abstand voneinander haben, wie dies im einzelnen in der DE-PS 35 44 673 beschrieben ist.

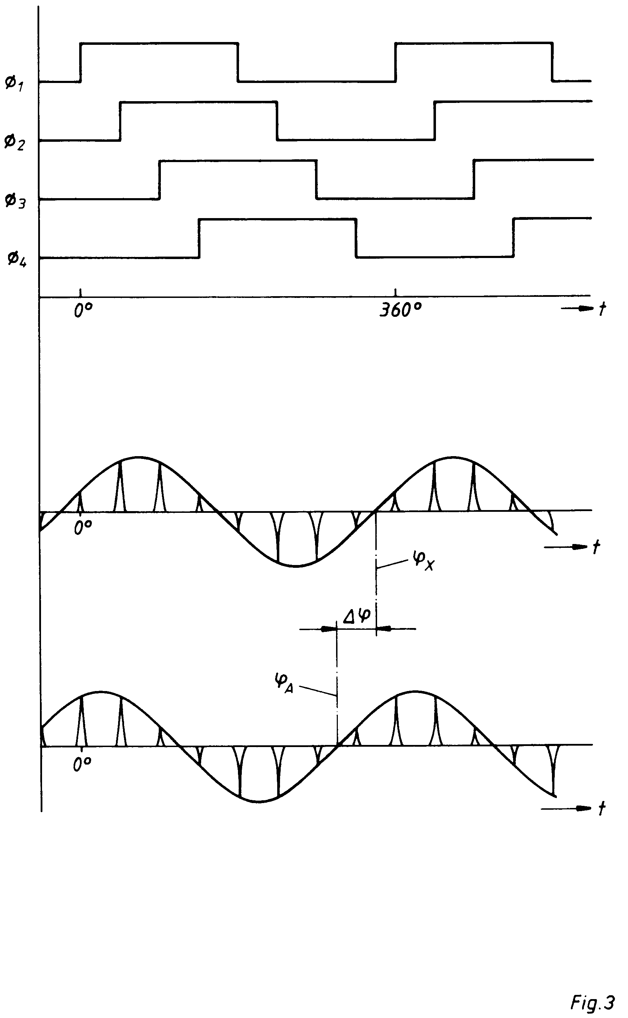

Die Leiterbahnen der Gitterwicklung X und der Gitterwicklung A werden in nachstehend noch zu beschreibender Reihenfolge zur Durchführung einer Messung aufeinanderfolgend periodisch phasenverschobene Signale in Form von Rechteckimpulsen $\Phi_1$, $\Phi_2$, $\Phi_3$ und $\Phi_4$ zugeführt, die im oberen Teil von Figur 3 angedeutet sind. Diese Rechteckimpulse haben, wie zu erkennen ist, eine Länge von 180°, so daß zunächst vier aufeinanderfolgende, um 45° zueinander phasenverschobene ansteigende Impulsflanken und 45° nach der letzten ansteigenden Impulsflanke vier jeweils um 45° zueinander phasenverschobene abfallende Impulsflanken entstehen, worauf dann nach 45° wieder vier jeweils um 45° phasenverschobene, ansteigende Impulsflanken auftreten.

Die Impulse $\Phi_1$ werden von der Treiberstufe 2 zunächst der Leiterbahn $x_1$ der Gitterwicklung X, die Impulse $\Phi_2$ der Leiterbahn $x_2$ der Gitterwicklung X, die Impulse $\Phi_3$ der Leiterbahn $x_3$ der Gitterwicklung X und die Impulse $\Phi_4$ der Leiterbahn $x_4$ der Gitterwicklung X zugeführt.

Auf diese Weise durchläuft also die Leiterbahnen der Gitterwicklung X eine periodische Signaloder Impulsfolge wie sie im oberen Teil von Figur 3 angedeutet ist. Dies hat zur Folge, daß in der in Figur 2 angedeuteten Abtastspule 4, deren Mittelpunkt zwischen der Leiterbahn $x_4$ der ersten Leiterbahngruppe der Gitterwicklung X und der Leiterbahn $a_4$ der Leiterbahngruppe der Gitterwicklung A liegt, periodische Spannungsimpulse induziert werden, die eine Folge der ansteigenden und abfallenden Impulsflanken der Impulse $\Phi_1$ bis $\Phi_4$ sind. Die Spannungsimpulse, die durch die Gitterwicklung induziert werden, sind in Figur 3 im mittleren Diagramm gezeigt, wobei auch die Zuordnung zu den erzeugenden Impulsen $\Phi_1$ bis $\Phi_4$ zu erkennen ist, die darüber dargestellt sind. Werden daher diese Impulse den Leiterbahnen $x_1$ bis $x_4$ zugeführt, so werden entsprechende Spannungsimpulse in der in Figur 2 angedeuteten Abtastspule 4 induziert. Dabei ergibt sich ein minimaler Spannungsimpuls dann, wenn eine unter der Mitte der Spule 4 hindurchlaufende Leiterbahn mit Strom beaufschlagt wird, und ein maximaler Spannungsimpuls, wenn eine unter dem Randbereich der Spule hindurchlaufende Leiterbahn mit Strom beaufschlagt wird. Daher zeigt eine Betrachtung von Figur 2, daß eine Beaufschlagung der Leitung $x_4$ der ersten Leiterbahngruppe und eine Beaufschlagung der Leitung $x_1$ der zweiten Leiterbahngruppe der Gitterwicklung X zur Erzeugung eines kleinen Spannungsimpulses führt, wobei sich bei Stromrichtungen entsprechend den Pfeilen durch die Leiterbahn $x_4$ der ersten Leiterbahngruppe ein negativer Impuls und durch die Leiterbahn $x_1$ der zweiten Leiterbahngruppe ein positiver Impuls ergibt. Zwischen diesen beiden Impulsen muß daher ein Nulldurchgang der Spannung vorliegen, der im mittleren Diagramm von Figur 3 bei $\phi_x$ liegt. Bei einer Verschiebung der Impulse um 180°, also bei in den erwähnten Leiterbahnen umgekehrter Stromrichtung ergeben sich weitere Nulldurchgänge, die jeweils um 180° verschoben sind. Die zwischen diesen Nulldurchgängen erzeugten Impulse entstehen durch die übrigen Teile der Impulsfolgen aus dem oberen Teil der Figur 3.

Werden die so entstehenden Spannungsimpulse über einen an die Abtastspule 4 angeschlossenen Verstärker 5 (Figur 1) und von diesem einem Tiefpaßfilter 6 zugeführt, so ergibt sich die im mittleren Teil von Figur 3 angedeutete, sinusförmige Hüllkurve, deren zeitliche Nulldurchgänge von einem Nulldurchgangs-Detektor 7 ermittelt und an die Auswerteschaltung 10, die beispielsweise aus einem Mikroprozessor besteht, weitergeleitet werden. Werden entsprechend der Gitterwicklung A von der Treiberstufe 2 Impulse $\Phi_1$, $\Phi_2$, $\Phi_3$, $\Phi_4$ gemäß oberem Diagramm aus Figur 2 durchgeführt, so ergibt sich wegen der Lage der Abtastspule 4 bezüglich der Gitterwicklung A, nämlich nahezu mittig über der Leiterbahn $a_4$ der ersten Leiterbahngruppe (Figur 3), verglichen zu der Lage bezüglich der Gitterwicklung X ein Nulldurchgang, der bei A im unteren Diagramm von Figur 3 liegt. Auch die durch Beaufschlagung der Gitterwicklung A in der Abtastspule 4 erzeugten Spannungsimpulse werden über den Verstärker 5 (Figur 1) dem Tiefpaßfilter 6 zugeleitet, so daß der im unteren Diagramm von Figur 3 angedeutete sinusförmige Spannungsverlauf entsteht. Die Nulldurchgänge dieses sinusförmigen Spannungsverlaufes werden im Nulldurchgangs-Detektor 7 erkannt und der Auswerteschaltung 10 zugeführt.

Wie in der DE-PS 35 44 673 erläutert, kann bei "Kopplung" der Abtastspule mit dem die Gitterwicklungen ansteuernden Mikroprozessor die Position der Abtastspule auf dem Digitalisiertablett durch Ermittlung der vorstehend erwähnter Phasenverschiebungen $\Delta\phi$ (Figur 3) ermittelt werden, wobei die Leiterbahngruppe der Gitterwicklung A bzw. B, also in der bekannten Anordnung, der Gitterwicklung für die Grob-Messung dadurch ermittelt wird, daß der Zeitpunkt der Ansteuerung der jeweiligen Gitterwicklung bekannt ist, so daß aus dem Zeitpunkt der entsprechenden Spannungsinduktion in der Abtastspule auf diese Leiterbahngruppe innerhalb der Gitterwicklung A bzw. B geschlossen werden kann.

Wie in Figur 1 angedeutet, ist jedoch bei der vorliegenden Digitalisiereinrichtung keine "Kopplung" zwischen der Ansteuerschaltung 1, die das Digitalisiertablett ansteuert, und der Abtastspule 4 vorhanden. Vielmehr ist die Abtastspule 4 über den Verstärker 5, den Tiefpaßfilter 6 und den Nulldurchgangs-Detektor 7 mit der Auswerteschaltung 10 verbunden, die keinerlei galvanische Verbindung oder sonstige Kopplung mit der Ansteuerschaltung 1 aufweist.

Würde man bei einem derartigen Aufbau das Digitalisiertablett in der in der DE-PS 35 44 673 beschriebenen Weise mittels der Ansteuerschaltung 1 ansteuern, also beispielsweise zunächst eine Gruppe von Impulsen $\Phi_1$ bis $\Phi_4$ an die Gitterwicklung X, dann unmittelbar darauf eine solche Gruppe an die Gitterwicklung A, danach eine solche Gruppe an die Gitterwicklung Y und unmittelbar danach eine solche Gruppe an die Gitterwicklung B legen, um am Ende der Beaufschlagung der Gitterwicklung B direkt wieder die Gitterwicklung X anzusteuern, so würden zwar in der Abtastspule 4 in der gleichen Weise, wie vorstehend angedeutet und im einzelnen in der DE-PS 35 44 673 erläutert, Spannungsimpulse induziert, wie sie in den unteren Diagrammen von Figur 3 angedeutet sind, und es können in der Auswerteschaltung 10 auch in gleicher Weise die Nulldurchgänge der sinusförmigen Spannungsverläufe ermittelt werden. Es wäre jedoch nicht möglich, einen der ermittelten Spannungsverläufe einer bestimmten Gitterwicklung zuzuordnen, so daß aus diesen Spannungsverläufen auch nicht die Position der Abtastspule auf dem Digitalisiertablett geschlossen werden kann.

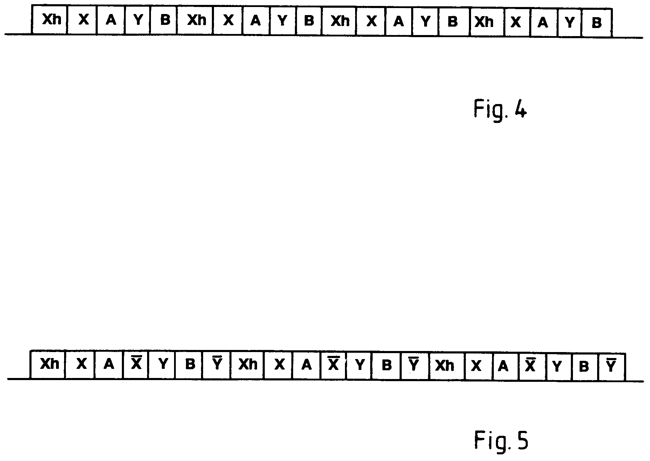

Um diese Schwierigkeit zu beseitigen, wird die Ansteuerung der Gitterwicklungen in der in Figur 4 angedeuteten Weise modifiziert, indem zunächst die Gitterwicklung X, dann unmittelbar folgend die Gitterwicklung A, daraufhin unmittelbar folgend die Gitterwicklung Y und dann die Gitterwicklung B mit einer gleichen Anzahl von Impulsen $\Phi_1$ bis $\Phi_4$ beaufschlagt werden. Bevor jedoch eine Beaufschlagung der Gitterwicklung X beginnt, ist eine Unterbrechungszeitspanne Xh vorgesehen, in der beispielsweise die Gitterwicklung X mit Signalen angesteuert wird, die die gleiche Form wie die Impulse $\Phi_1$ bis $\Phi_4$ haben, deren Frequenz jedoch halb so groß ist.

Somit geht jeder Ansteuerung der Gitterwicklung X eine Unterbrechungszeitspanne voraus, während die Ansteuerung der übrigen Gitterwicklungen unmittelbar aufeinander folgt. Auf diese Weise kann also in der Auswerteschaltung 10 zwischen Ansteuerungen durch die Impulse $\Phi_1$ bis $\Phi_4$ und der Unterbrechungszeitspanne unterschieden werden, in der entweder überhaupt keine Ansteuerung einer Gitterwicklung stattfindet oder, vorzugsweise, die Gitterwicklung X mit Impulsen gemäß $\Phi_1$ bis $\Phi_4$, jedoch mit halber Frequenz beaufschlagt wird. Aus dem Auftreten des Übergangs von Unterbrechungszeitspanne zu Beaufschlagung der Gitterwickung X mit den Impulsen $\Phi_1$ bis $\Phi_4$ kann somit die Auswerteschaltung in gleicher Weise, wie bei der vorbekannten Digitalisiereinrichtung gemäß DE-PS 35 44 673 feststellen, welche Folge von Impulsen $\Phi_1$ bis $\Phi_4$ gerade welcher der Gitterwicklungen zugeführt wurde, um dann aus den induzierten Spannungen die Phasendifferenz der Nulldurchgänge der Impulsfolgen auf den zusammengehörigen Gitterwicklungen, also auf den Gitterwicklungen X und A oder Y und B zu ermitteln und aus dieser Phasendifferenz $\Delta\phi$ (Figur 3) die Position der Abtastspule auf dem Digitalisiertablett zu ermitteln.

In diesem Zusammenhang sei erwähnt, daß infolge der unterschiedlichen räumlichen Abstände der benachbarten Leiterbahngruppen der zueinander gehörigen Gitterwicklungen über das Digitalisiertablett allein aus der ermittelten Phasendifferenz die Position der Abtastspule auf dem Digitalisiertablett ermittelt werden kann, da diese Phasendifferenz dem räumlichen Abstand der Leiterbahngruppen der beiden Gitterwicklungen entspricht und daher für jede der Leiterbahngruppen eindeutig ist.

Bei dem vorstehend erläuterten Ablauf wird die Ermittlung des Zeitpunktes des Beginns der Beaufschlagung der Gitterwicklung X mit Impulsen dadurch erleichtert, daß während der Unterbrechungszeitspanne Xh an die Gitterwicklung X Impulse anderer Frequenz gelegt sind, so daß der Übergang von den die Unterbrechungszeitspanne kennzeichnenden Impulsen zu den Signale bildenden Impulsen auf der Gitterwicklung X leicht aus den in der Abtastspule 4 induzierten Spannungsimpulsen ermittelt werden kann, zumal die Spannungsimpulse, die im Bereich der Übergänge von der Beaufschlagung einer Gitterwicklung, etwa der Gitterwicklung A, mit Impulsen zur Beaufschlagung der nachfolgende Gitterwicklung, etwa der Gitterwicklung Y, mit Impulsen ein deutlich anderes Erscheinungsbild von Spannungsimpulsen in der Abtastspule 4 induziert.

Trotzdem tritt eine gewisse Ungenauigkeit bei der Ermittlung des Nulldurchgangs der sinusförmigen Hüllkurve gemäß Figur 3 auf. Dies hat seine Ursache u.a. darin, daß unvermeidbare Schaltungsfehler gewisse Verschiebungen in den Zeitabläufen der angelegten Impulse verursachen.

Um diese Ungenauigkeiten zu vermeiden kann, wie in Figur 5 angedeutet, die Signalfolge gegenüber derjenigen aus Figur 4 dadurch modifiziert werden, daß jeweils nach aufeinanderfolgender Beaufschlagung der Gitterwicklungen X und A sowie nach aufeinanderfolgender Beaufschlagung der Gitterwicklungen Y und B die Gitterwicklung X und die Gitterwicklung Y in gleicher Weise wie vorher, jedoch vom gegenüberliegenden Ende mit Impulsen $\Phi_1$, $\Phi_2$, $\Phi_3$, $\Phi_4$ beaufschlagt wird, wie dies durch die Abschnitte $\overline{X}$ und $\overline{Y}$ in Figur 5 angedeutet ist. Diese Beaufschlagung erfolgt über die in Figur 1 gestrichelt angedeuteten mit $\overline{X}$ bzw. $\overline{Y}$ bezeichneten Leiterbahnen, wobei die Weiterführung zum anderen Ende der Gitterwicklung X bzw. Y unterhalb der Ebene 20 bzw. 21 stattfindet.

Die durch Beaufschlagung der Gitterwicklung vom ersten Ende (Abschnitt X in Figur 5) und die durch Beaufschlagung der Gitterwicklung X vom anderen Ende (Bereich $\overline{X}$ in Figur 5) induzierten Spannungsimpulse werden jeweils in der gleichen Weise verarbeitet und aus ihnen die Nulldurchgänge der in Figur 3 dargestellten Hüllkurven ermittelt, wie dies vorstehend dargelegt ist. Wenn die so erhaltenen Werte für die Gitterwicklung X gemittelt werden, fällt der Einfluß der Schaltungsfehler u.ä. aus dem erhaltenen Wert heraus und man erhält den genauen Nulldurchgang.

**Patentansprüche**

1. Digitalisiereinrichtung mit einem Digitalisiertablett (20, 21, 22, 23), das für jede der beiden Koordinatenrichtungen eine in sich regelmäßig wiederholende Leiterbahngruppen unterteilte erste Gitterwicklung (X; Y) und eine in sich regelmäßig wiederholende Leiterbahngruppen unterteilte zweite Gitterwicklung (A; B) aufweist, die derart angeordnet sind, daß die ersten Leiterbahnen benachbarter Leiterbahngruppen dieser ersten und zweiten Gitterwicklungen in der zugehörigen Koordinatenrichtung über die gesamte Arbeitsfläche unterschiedliche Abstände haben, wobei die Gitterwicklungen (X, A; Y, B) für die eine Koordinatenrichtung von einer Ansteuerschaltung (1) mit einer vorgegebenen Folge von periodischen Signalen beaufschlagt werden, so daß für eine vorgegebene Zeitspanne ein erstes Signal an das erste Ende der ersten Gitterwicklung (X) und für eine unmittelbar darauffolgende zweite vorgegebene Zeitspanne ein zweites Signal an das erste Ende der zweiten Gitterwicklung (A) gelegt wird, und wobei unmittelbar anschließend an die Beaufschlagung der Gitterwicklungen (X, A) für die eine Koordinatenrichtung die Gitterwicklungen (Y, B) für die andere Koordinatenrichtung in der gleichen Weise beaufschlagt werden, sowie mit einer auf das Digitalisiertablett (20, 21, 22, 23) auflegbaren Abtastspule (4), in der die Signale Spannungen induzieren, die zur Ermittlung der Position der Abtastspule (4) auf dem Digitalisiertablett (20, 21, 22, 23) einer Auswerteschaltung (10) zugeführt werden, **dadurch gekennzeichnet**, daß die Ansteuerschaltung (1) derart dem Digitalisiertablett (20, 21, 22, 23) und die Auswerteschaltung (10) derart der Abtastspule (4) zugeordnet sind, daß sie voneinander galvanisch getrennt sind und unabhängig voneinander arbeiten, daß zwischen Ende der Beaufschlagung der Gitterwicklungen (Y, B,) für die andere Koordinatenrichtung und dem Anfang der Beaufschlagung der Gitterwicklungen (X, A) für die eine Koordinatenrichtung eine Unterbrechungszeitspanne (Xh) vorgesehen ist, so daß die Auswerteschaltung (10) den Beginn der Beaufschlagung der Gitterwicklungen (X, A) für die eine Koordinatenrichtung feststellen kann, und daß die Auswerteschaltung (10) zur Ermittlung der Position der Abtastspule (4) auf dem Digitalisiertablett (20, 21, 22, 23) die Phasendifferenz von erstem und zweitem Signal der Gitterwicklungen (X, A; Y, B) für die jeweilige Koordinatenrichtung ermittelt.

2. Digitalisiereinrichtung nach Anspruch 1, **dadurch gekennzeichnet**, daß die erste Gitterwicklung (X) für die eine Koordinatenrichtung während der Unterbrechungszeitspanne (Xh) mit einem periodischen Hilfssignal beaufschlagt wird.

3. Digitalisiereinrichtung nach Anspruch 2, **dadurch gekennzeichnet**, daß die Frequenz des Hilfssignals halb so groß ist wie die Frequenz des ersten Signals.

4. Digitalisiereinrichtung nach einem der Ansprüche 1 bis 3, **dadurch gekennzeichnet**, daß die erste Gitterwicklung (X; Y) für jede der beiden Koordinatenrichtungen unmittelbar anschließend an die Beaufschlagung der zugehörigen zweiten Gitterwicklung (A; B) mit dem zweiten Signal an ihrem zweiten Ende für eine vorgegebene Zeitspanne mit einem dritten Signal beaufschlagt wird.

5. Digitalisiereinrichtung nach einem der Ansprüche 1 bis 4, **dadurch gekennzeichnet**, daß die Form und Frequenz aller Signale und die Zeitspannen, während der sie an die Gitterwicklungen (X, A; Y, B) gelegt sind, gleich sind.

6. Digitalisiereinrichtung nach Anspruch 5, **dadurch gekennzeichnet**, daß jede Zeitspanne vier Perioden des angelegten Signals umfaßt.

*Fig. 1*

Fig.2

Fig.3

| Xh | X | A | Y | B | Xh | X | A | Y | B | Xh | X | A | Y | B | Xh | X | A | Y | B |

Fig. 4

| Xh | X | A | $\bar{X}$ | Y | B | $\bar{Y}$ | Xh | X | A | $\bar{X}$ | Y | B | $\bar{Y}$ | Xh | X | A | $\bar{X}$ | Y | B | $\bar{Y}$ |

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | EP-A-0 228 579 (ARISTO GRAPHIC SYSTEME GMBH & CO KG)<br>* Seite 3, Zeile 19 - Seite 15, Zeile 4; Abbildungen 1-4 *<br>--- | 1 | G06K11/16 |
| A | US-A-4 552 991 (HULLS)<br>* Spalte 1, Zeile 8 - Spalte 7, Zeile 6; Abbildungen 1-5 *<br>--- | 1 | |
| A | PATENT ABSTRACTS OF JAPAN<br>vol. 11, no. 121 (P-568)16. April 1987<br>& JP-A-61 267 120 (SEIKO INSTR & ELECTRONICS LTD) 26. November 1986<br>* Zusammenfassung *<br>----- | | |
| | | | **RECHERCHIERTE SACHGEBIETE (Int.Cl.5)**<br><br>G06K |

Der vorliegende Recherchenbericht wurde für alle Patentansprüche erstellt

| Recherchenort | Abschlußdatum der Recherche | Prüfer |
|---|---|---|
| DEN HAAG | 11. Juli 1994 | Semple, M |